# EUROPÄISCHE PATENTANMELDUNG

(11) **EP 3 384 761 A1**
(43) Veröffentlichungstag der Anmeldung: **10.10.2018**
(21) Anmeldenummer: 18165678.6
(22) Anmeldetag: 04.04.2018
(51) Int. Cl.: A01G 23/06, A01C 17/00, B64D 1/16, A01C 3/06, A01C 7/08, B05B 3/00

(54) **VORRICHTUNG UND VERFAHREN ZUM VERTEILEN VON SCHÜTTGUT**

(30) Priorität: 07.04.2017 AT 502902017
(71) Anmelder: Gondolatsch, Klaus, 9972 Virgen (AT)
(72) Erfinder: Gondolatsch, Klaus, 9972 Virgen (AT)
(74) Vertreter: Torggler & Hofinger Patentanwälte

(57) **Zusammenfassung**

Vorrichtung zum Verteilen von Schüttgut, insbesondere Hackschnitzel, wobei die Vorrichtung (1) dazu geeignet ist, mittels einer Seilbahn (2) befördert zu werden, und wobei die Vorrichtung (1) umfasst: einen Behälter (3), welcher mit dem Schüttgut befüllbar ist und eine Öffnung (4) aufweist, eine Befestigungsvorrichtung zum Befestigen des Behälters (3) an der Seilbahn (2), insbesondere einem Tragseil (5) und/oder einem Laufwagen der Seilbahn (2), und eine Ausbringvorrichtung (6), welche an der Öffnung (4) angeordnet ist und zum Ausbringen des Schüttguts ausgebildet ist.

## Beschreibung

Die vorliegende Erfindung betrifft eine Vorrichtung zum Verteilen von Schüttgut, insbesondere Hackschnitzel, Wachstum fördernden Mitteln und/oder düngenden Mitteln, sowie ein entsprechendes Verfahren.

Nach dem Fällen von Bäumen ist es vorteilhaft, nicht weiter zu verwertende Äste und Ähnliches wieder im Wald auszubringen. Dadurch geht die entsprechende Biomasse nicht verloren, sondern kann dem Wald zurückgegeben werden, wodurch durch die Verrottung und anschließende Humusbildung und ähnliche Prozesse ein Nutzen aus den vom Baum nicht primär verwendeten Materialien gezogen werden kann.

Insbesondere im bergigen Gelände und sonstigen Hanglagen, also im steilen Wald, ist es zwar prinzipiell möglich, die Äste direkt vor Ort zu entfernen. Dies ist jedoch eine extrem gefährliche Aufgabe für Waldarbeiter. Denn durch die am Hang nicht fixierten Baumstämme werden Waldarbeiter oft verletzt, wenn die Baumstämme in Bewegung geraten. Zum Zeitpunkt der Anmeldung ist die Waldarbeit am Hang eine der gefährlichsten Arbeiten, das heißt es treten am meisten Verletzungen auf.

Maschinen zum Entasten der Baumstämme (z.B. sogenannter Prozessor) können erst im Tal oder auf Forststraßen, das heißt auf nicht steilen Flächen, eingesetzt werden. Ein Zurückbringen des entfernten Materials in den steilen Wald wird dann in der Regel nicht mehr durchgeführt, da der Aufwand zu groß erscheint.

Aufgabe der vorliegenden Erfindungen ist es daher, eine Vorrichtung und ein Verfahren bereitzustellen, womit das Wiederausbringen des entfernten Materials im Wald so leicht möglich ist, dass es auch wirtschaftlich durchführbar ist.

### Diese Aufgabe wird durch die Merkmale der Ansprüche 1 und 15 gelöst

Hinsichtlich der Vorrichtung wird diese Aufgabe durch die Merkmale des Anspruchs 1 gelöst. Dies geschieht, indem die Vorrichtung dazu geeignet ist, mittels einer Seilbahn befördert zu werden, und wobei die Vorrichtung Folgendes beinhaltet:
- einen Behälter, welcher mit dem Schüttgut befüllbar ist und eine Öffnung aufweist,
- eine Befestigungsvorrichtung zum Befestigen des Behälters an der Seilbahn, insbesondere einem Tragseil und/oder einem Laufwagen der Seilbahn, und
- eine Ausbringvorrichtung, welche an der Öffnung angeordnet ist und zum Ausbringen des Schüttguts ausgebildet ist.

In Bezug auf das Verfahren wird die Aufgabe dadurch gelöst, dass das Schüttgut, insbesondere die Hackschnitzel, mittels einer Seilbahn befördert werden und von - insbesondere unterhalb - der Seilbahn aus ausgebracht werden.

Da im steilen Wald Seilbahnen, insbesondere Forstseilbahnen, ohnehin oft zum Einsatz kommen, kann das von den Baumstämmen entfernte Material (bspw. durch Häckseln) zu Schüttgut verarbeitet werden (insbesondere in Hackschnitzel) und auf einfache Weise im Wald verteilt werden.

Ein weiterer Vorteil der Erfindung besteht darin, dass dem Schüttgut bodenverbessernde Düngemittel beigemischt werden können.

Es ist auch möglich, nur Dünger als Schüttgut zu verwenden. Bei übersäuerten Waldböden kann dies besonders nützlich sein, um den Nährstoffkreislauf im Wald durch Förderung der Verrottung wieder in Gang zu bringen.

Hinzu kommt, dass durch die Verteilung von beispielsweise gehäckseltem Material statt ganzer Äste dessen Verrottung um Jahre beschleunigt wird aufgrund der wesentlich kleineren Größe.

Ein Einsatz der Erfindung ist auch dann sinnvoll, wenn die Steilheit (oder Flachheit) des Geländes auch den Einsatz üblicher Maschinen ermöglichen würde. Derartige übliche Maschinen sind nämlich oft sehr schwer, was zu einer Verdichtung des Bodens führen kann. Das kann durch die Erfindung vermieden werden. In dichten Wäldern kann es außerdem schlicht unmöglich sein, die üblich verwendeten Maschinen einzusetzen, da die Abstände zwischen den Bäumen für diese zu gering sind.

Vorteilhafte Weiterbildungen der Erfindung sind in den abhängigen Ansprüchen definiert.

Die Vorrichtung kann insbesondere dazu ausgebildet sein, von der Seilbahn hängend befördert zu werden. Da insbesondere bei Forstseilbahnen die Höhe des Tragseils nicht so groß ist, dass die Vorrichtung vollständig über den Bäumen schwebt, sollte die erfindungsgemäße Vorrichtung in diesen Fällen so ausgebildet sein, dass sie sich um die Bäume herum windet, wenn eine Kollision auftritt. Die Vorrichtung muss sich unter Umständen auch um Stützen der Seilbahn herumwinden können. Hierzu kann der Behälter im Wesentlichen zylindrisch ausgebildet sein

Die Ausbringvorrichtung kann als aktive Auswurfvorrichtung ausgeführt sein, das heißt das Schüttgut wird dann nicht nur durch den Einfluss der Schwerkraft aus dem Behälter ausgebracht.

Dabei kann in einer einfachen Ausführungsform eine Frästrommel und/oder ein Schleuderrad zum Auswurf des Schüttguts zum Einsatz kommen. In einer ganz besonders einfachen Ausführungsform der Erfindung kann eine einer Schneefräse ähnliche Konstruktion über Kopf an der Öffnung des Behälters montiert werden.

Insbesondere durch eine aktive Auswurfvorrichtung kann das Ausbringen des Schüttguts streuend erfolgen. Das heißt das Schüttgut wird über einen größeren Bereich verteilt. Dies ist vorteilhaft, um nicht nur punktuell das Material der Äste und dergleichen zurück in den Wald zu bringen.

Einem verteilenden Ausbringen des Schüttguts kann auch zuträglich sein, dass die Ausbringungsvorrichtung relativ zum Behälter rotierbar angeordnet ist.

Für die - insbesondere rotierende - Ausbringvorrichtung kann ein - vorzugsweise gebogenes - Rohr vorgesehen sein. Auch dies kann eine besonders einfache Ausführungsform darstellen, bei der das Schüttgut in eine gewisse Richtung ausgebracht werden kann.

Zum Fördern des Schüttguts aus dem Behälter hin zur Öffnung kann eine Förderschnecke vorgesehen sein. Dies gilt auch für den Fall, dass die Öffnung nach unten weist. Denn durch Vibrationen und vor allem das Eigengewicht, beispielsweise von Hackschnitzeln, kann das Schüttgut eine bemerkenswerte Stabilität aufweisen. Das heißt, selbst bei einem nach unten geöffneten Behälter kann es vorkommen, dass das Schüttgut gar nicht oder nur sehr langsam aus dem Behälter hervortritt. Dies kann insbesondere dann auftreten, wenn der Behälter nahe der Öffnung ein Verjüngung aufweist. Durch eine Förderschnecke kann diesem Problem Abhilfe geschaffen werden.

In diesem Zusammenhang sei darauf hingewiesen, dass ein Kubikmeter Hackschnitzel ca. 400 Kilogramm (bei 50% Wassergehalt) wiegen kann.

Die aktive Auswurfvorrichtung und/oder die rotierende Bewegung der Ausbringvorrichtung relativ zum Behälter und/oder die Förderschnecke können mit einem Antrieb angetrieben werden. In einer bevorzugten Ausführungsform ist genau ein Antrieb vorgesehen und die verschiedenen Bewegungen werden mittels Getrieben, Kupplungen oder dergleichen in geeignete Geschwindigkeiten/Drehmomente umgesetzt. Denn die Bewegungen beispielsweise der Förderschnecke und der Rotation werden im Normalfall weit weniger schnell ausgeführt als beispielsweise die Bewegung der Frästrommel und/oder des Schleuderrads.

Besonders bevorzugt kann eine Ausführungsform sein, bei der der Antrieb (oder die Antriebe) ferngesteuert werden können. Denn im Normalfall hat eine Forstseilbahn nicht die Kapazität und Zulassung einen Bediener zusammen mit der Vorrichtung zu Befördern. Beziehungsweise ist es in diesem Fall wirtschaftlicher, eine größere Vorrichtung zu verwenden, wenn die Kapazität gegeben ist.

Alternativ könnte die Vorrichtung natürlich dazu programmiert werden, zu gewissen Zeiten aktiv zu werden, um mit der Verteilung dort zu beginnen, wo eine vorherige Verteilung endete.

Der Behälter kann - wie erwähnt - im Wesentlichen zylindrisch ausgeführt sein, da er dann besonders gut geeignet ist, sich um Hindernisse herumzuwinden.

Der Behälter kann eine Schutzvorrichtung zum Schutz gegen Aufprall aufweist, welche insbesondere eine die Ausbringvorrichtung lateral zumindest teilweise abdeckende Schürze beinhaltet. Dadurch kann auch die Ausbringvorrichtung bei einem Aufprall geschützt werden und gleichzeitig die Fähigkeit der Vorrichtung, sich um Hindernisse herumzuwinden, verbessert werden. Zu diesem Zweck kann auch die Schürze im Wesentlichen zylindrisch ausgeführt sein.

Der Behälter kann eine Höhe zwischen 1 m und 7 m, bevorzugt zwischen 2,5 m und
5,5 m und besonders bevorzugt zwischen 4 m und 4,5 m, aufweisen. Der Behälter kann einen Durchmesser zwischen 0,5 m und 3 m, bevorzugt zwischen 0,75 m und 2 m und besonders bevorzugt zwischen 1 m und 1,5 m, aufweisen.

Schutz begehrt wird ebenfalls für eine Anordnung aus einer Seilbahn und einer erfindungsgemäßen Vorrichtung und eine Verwendung einer erfindungsgemäßen Vorrichtung zum Ausbringen von Schüttgut von einer Seilbahn aus.

Weitere Vorteile und Einzelheiten der Erfindung ergeben sich anhand der Figuren sowie der dazugehörigen Figurenbeschreibung. Dabei zeigen:
- Fig. 1: eine Schnittdarstellung einer erfindungsgemäßen Vorrichtung,
- Fig. 2: eine weitere Schnittdarstellung einer weiteren erfindungsgemäßen Ausführungsform
- Fig. 3: eine erfindungsgemäße Anordnung und
- Fig. 4: eine weitere Schnittdarstellung einer weiteren erfindungsgemäßen Ausführungsform mit einer Schutzvorrichtung.

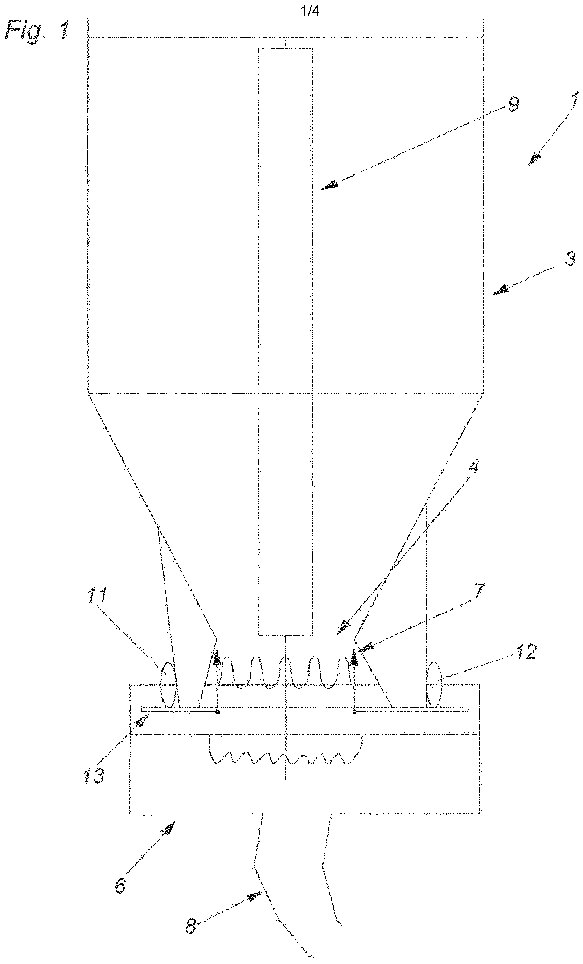

Die erfindungsgemäße Vorrichtung 1 aus Figur 1 weist einen im Wesentlichen zylindrischen Behälter 3 und eine Ausbringvorrichtung 6 auf. In dieser ganz besonders einfachen Ausführungsform ist die Ausbringvorrichtung 6 ähnlich einer über Kopf montierte Schneefräse realisiert.

Der Behälter 3 ist röhrenförmig, wodurch er sich um Baumwipfel und Stützen der Seilbahn 2 und dergleichen herumwinden kann.

Für den Behälter 3 können zusammensetzbare Rohre verwendet werden, wie sie auch bei Bauschuttrutschen, beispielsweise beim Umbauen von Häusern, eingesetzt werden. Dadurch kann die variable Länge des Behälters 3 erreicht werden. Solche zusammensetzbare Rohre können relativ zueinander leicht beweglich sein. In diesem Fall können aber Verschraubungen verwendet werden, um das Gebilde zu verstärken und starre Verbindungen zu schaffen.

Der Behälter 3 kann dann ganz einfach von oben mit Hackschnitzeln oder dergleichen befüllt werden und im Anschluss beispielsweise mit Ketten oder dergleichen als Befestigungsvorrichtung an einem Laufwagen unterhalb des Tragseils 5 der Seilbahn 2 befestigt werden.

Die Ausbringvorrichtung 6 ist so am Behälter 3 montiert, dass die Frästrommel 7 an der Öffnung 4 des Behälters 3 angeordnet ist. Die Frästrommel 7 beschleunigt und transportiert das Schüttgut im Behälter 3 zum gebogenen Rohr 8. Aus dem gebogenen Rohr 8 heraus verteilt sich das ausgeworfene Material über einen gewissen Bereich (das heißt nicht punktuell). Es handelt sich also um einen streuenden Auswurf bzw. ein streuendes Verteilen.

Für eine weitere Vergrößerung des Auswurfbereichs ist vorgesehen, dass die Ausbringvorrichtung 6 in Bezug auf den Behälter 3 rotierend gelagert ist. Hierzu ist die Ausbringvorrichtung 6 über Räder 12, welche auf einem Kragen 13 am Behälter 3 laufen, befestigt. (Es können drei oder vier oder mehr Räder zum Einsatz kommen.)

Es ist ein Antrieb 11 vorgesehen, der sowohl die Frästrommel 7 als auch die Förderschnecke 9 und die Räder 12 durch geeignete Mechaniken und Getriebe entsprechend antreibt.

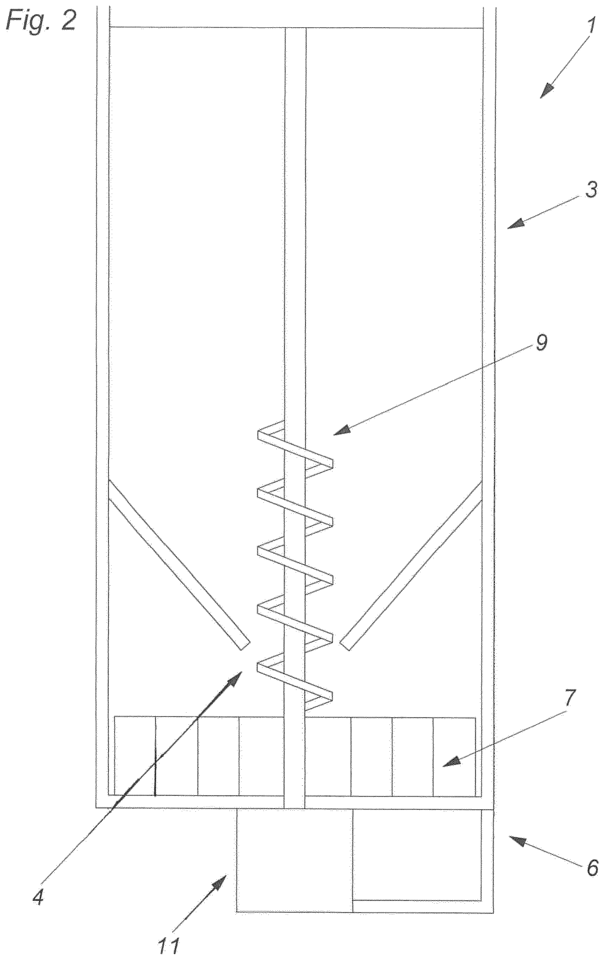

In Figur 2 ist eine weitere Ausführungsform dargestellt, wobei gleiche Bezugszeichen analoge Objekte bezeichnen.

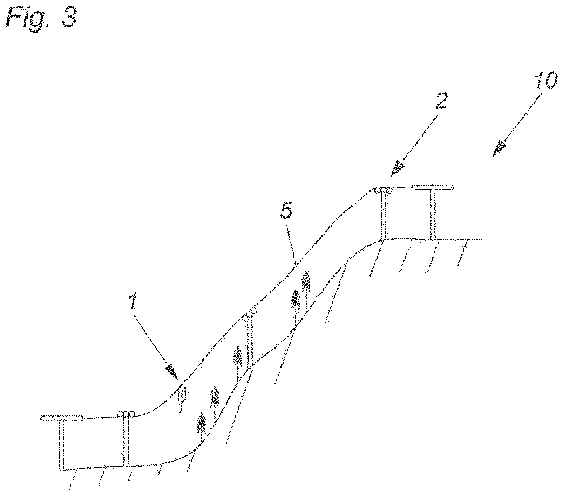

Figur 3 zeigt eine Anordnung einer Seilbahn 2 mit einer erfindungsgemäßen Vorrichtung 1, die am Tragseil 5 der Seilbahn 2 hängend befestigt ist. Wenn Berührungen zwischen der Vorrichtung 1 und Bäumen auftreten, kann sich die erfindungsgemäße Vorrichtung bei langsamer Fahrt der Seilbahn 2 um die Bäume und gegebenenfalls auch Stützen der Seilbahn 2 herumwinden.

Gefällte Bäume können mit der Seilbahn 2, beispielsweise einer Forstseilbahn, zum Ausgangspunkt oder Ablagepunkt der Seilbahn 2 befördert werden. Die Baumstämme können dort maschinell entastet werden und die Äste und weiteres Material können mittels eines Häckslers zu Hackschnitzel zerkleinert werden.

Diese können dann in einer einfachen Ausführung von oben in den Behälter 3 gefüllt werden und dann durch die Vorrichtung 1 und die Seilbahn 2 im Wald verteilt werden.

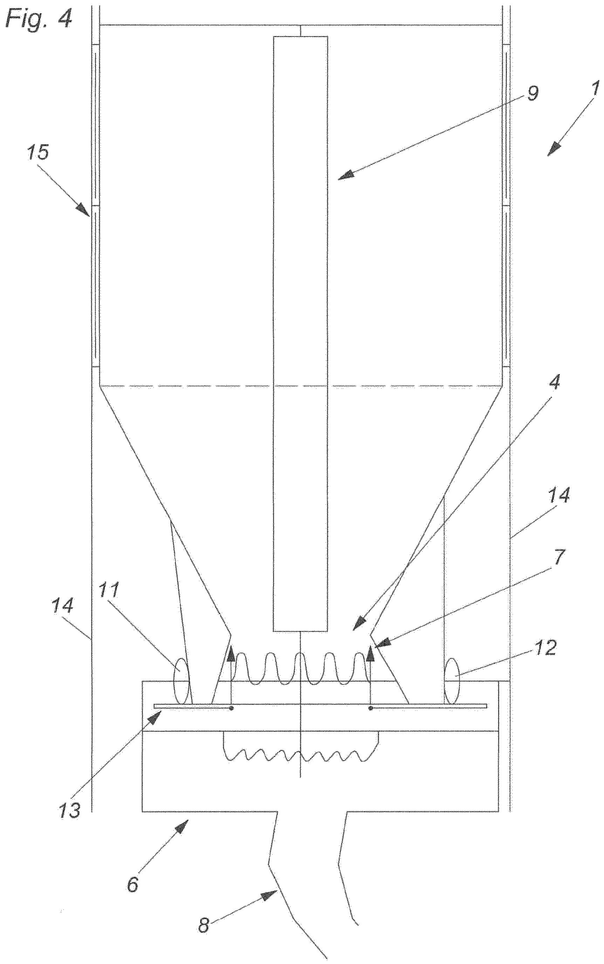

In Fig. 4 ist eine zu Fig. 1 analoge Ausführungsform dargestellt, wobei zusätzlich eine Schutzvorrichtung 15 vorhanden ist, die erstens den Behälter 3 vor Aufprall schützt und zweitens für ein besonders gutes Herumwinden der Vorrichtung 1 um Hindernisse, wie Baumstämme oder Seilbahnstützen, sorgen kann.

Letzteres kann noch verstärkt werden, wenn die Schutzvorrichtung 15 eine Schürze 14 beinhaltet, welche die Ausbringvorrichtung 6 lateral umgibt und dadurch abdeckt und vor Beschädigung durch Aufprall schützt.

## Patentansprüche

1. Vorrichtung zum Verteilen von Schüttgut, insbesondere Hackschnitzel, wobei die Vorrichtung (1) dazu geeignet ist, mittels einer Seilbahn (2) befördert zu werden, und wobei die Vorrichtung (1) umfasst:
- einen Behälter (3), welcher mit dem Schüttgut befüllbar ist und eine Öffnung (4) aufweist,
- eine Befestigungsvorrichtung zum Befestigen des Behälters (3) an der Seilbahn (2), insbesondere einem Tragseil (5) und/oder einem Laufwagen der Seilbahn (2), und
- eine Ausbringvorrichtung (6), welche an der Öffnung (4) angeordnet ist und zum Ausbringen des Schüttguts ausgebildet ist.

2. Vorrichtung nach Anspruch 1, **dadurch gekennzeichnet, dass** die Vorrichtung dazu ausgebildet ist, von der Seilbahn hängend befördert zu werden.

3. Vorrichtung nach einem der vorhergehenden Ansprüche, **dadurch gekennzeichnet, dass** die Ausbringvorrichtung (6) als aktive Auswurfvorrichtung ausgebildet ist.

4. Vorrichtung nach Anspruch 3, **dadurch gekennzeichnet, dass** die Auswurfvorrichtung zum streuenden Verteilen des Schüttguts geeignet ist.

5. Vorrichtung nach Anspruch 3 oder 4, **dadurch gekennzeichnet, dass** die Auswurfvorrichtung eine Frästrommel (7) und/oder ein Schleuderrad zum Auswurf des Schüttguts aufweist.

6. Vorrichtung nach einem der vorhergehenden Ansprüche, **dadurch gekennzeichnet, dass** die Ausbringvorrichtung (6) relativ zum Behälter rotierbar angeordnet ist.

7. Vorrichtung nach einem der vorhergehenden Ansprüche, **dadurch gekennzeichnet, dass** die - insbesondere rotierende - Ausbringvorrichtung (6) ein - vorzugsweise gebogenes - Rohr (8) zum Ausbringen des Schüttguts aufweist.

8. Vorrichtung nach einem der vorhergehenden Ansprüche, **dadurch gekennzeichnet, dass** eine Förderschnecke (9) zum Fördern des Schüttguts aus dem Behälter (3) hin zur Öffnung (4) vorgesehen ist.

9. Vorrichtung nach Anspruch 5 oder Anspruch 6 oder Anspruch 8, **dadurch gekennzeichnet, dass** - vorzugsweise genau - ein Antrieb (11) vorgesehen ist, mittels dessen die aktive Auswurfvorrichtung, insbesondere die Frästrommel (7) und/oder das Schleuderrad, und/oder eine rotierende Bewegung der Ausbringvorrichtung (6) und/oder die Förderschnecke (9) antreibbar ist.

10. Vorrichtung nach Anspruch 9, **dadurch gekennzeichnet, dass** der Antrieb (11) dazu ausgebildet ist, ferngesteuert zu werden.

11. Vorrichtung nach einer der vorhergehenden Ansprüche, **dadurch gekennzeichnet, dass** der Behälter (3) eine weitere Öffnung aufweist, wodurch der Behälter (3) von oben befüllbar ist.

12. Vorrichtung nach einem der vorhergehenden Ansprüche, **dadurch gekennzeichnet, dass** der Behälter (3) eine Schutzvorrichtung (15) zum Schutz gegen Aufprall aufweist, welche insbesondere eine die Ausbringvorrichtung (6) lateral zumindest teilweise abdeckende Schürze (14) beinhaltet.

13. Anordnung aus einer Seilbahn und einer durch die Seilbahn beförderten Vorrichtung nach einem der Ansprüche 1 bis 12.

14. Verwendung einer Vorrichtung nach einem der Ansprüche 1 bis 12 zum Ausbringen von Schüttgut von einer Seilbahn aus.

15. Verfahren zum Verteilen von Schüttgut, insbesondere Hackschnitzel, wobei das Schüttgut mittels einer Seilbahn (2) befördert wird und von - insbesondere unterhalb - der Seilbahn (2) aus ausgebracht wird, insbesondere unter Verwendung einer Vorrichtung (1) nach einem der Ansprüche 1 bis 12.
